# EUROPEAN PATENT SPECIFICATION

(11) **EP 1 953 210 B1**
(45) Date of publication and mention of the grant of the patent: **04.07.2012**
(21) Application number: 06822378.3
(22) Date of filing: 26.10.2006
(51) Int. Cl.: C10L 1/192, H01M 8/06, H01M 8/10, C10L 1/22, H01M 8/04

(54) **LIQUID FUEL AND FUEL CELL**
FLÜSSIGER BRENNSTOFF UND BRENNSTOFFZELLE
COMBUSTIBLE LIQUIDE ET PILE A COMBUSTIBLE

(30) Priority: 01.11.2005 JP 2005318776
(43) Date of publication of application: 06.08.2008
(73) Proprietor: SHISEIDO COMPANY, LTD., Tokyo 104-8010 (JP)
(72) Inventor: SOGABE, Atsushi, Yokohama-shi, Kanagawa 224-8558 (JP); KANEDA, Isamu, Yokohama-shi, Kanagawa 224-8558 (JP)
(74) Representative: Green, Mark Charles
(86) International application number: PCT/JP2006/321409
(87) International publication number: WO 2007/052533

(56) References cited:
- EP-A1- 1 505 139
- EP-A2- 1 349 227
- JP-A- 04 014 765
- JP-A- 09 279 080
- JP-A- 2001 353 957
- JP-A- 2005 105 025
- JP-A- 2005 190 975
- US-A- 4 452 610

## Description

### TECHNICAL FIELD

The present invention relates to a liquid fuel and a fuel cell.

### BACKGROUND ART

In recent years, attention has been paid to a fuel cell as an electric energy or power generating device with a high efficiency of electric power generation and less environmental load. The basic principle of a fuel cell is the reverse reaction of electrolysis of water, which involves no combustion. Therefore, none of harmful substances such as nitrogen oxides is generated. Furthermore, when energy is taken from a fuel except hydrogen, carbon dioxide is generated but the amount of generated carbon dioxide can be reduced compared to an internal combustion engine. Moreover, because chemical energy is directly converted into electric energy, energy loss in a process of energy conversion is small and the efficiency of electric power generation of a fuel cell is high. Because a fuel cell has a simple structure that is a combination of an anode, a cathode and an electrolyte film, no special power source is needed. Therefore, it is possible to make a cell compact, and studies for practical applications of a fuel cell, such as electric power sources for vehicles and recently, electric power sources for mobile instruments as well as distributed stationary electric power sources, have been widely conducted.

For fuel cells, direct methanol-type fuel cells (DMFC: Direct Methanol Fuel Cells) are known in which a liquid fuel such as aqueous solutions of methanol is fed to an anode for conducting an oxidation reaction while oxygen is fed to a cathode for conducting a reduction reaction (for example, see JP-A-2000-502205). In direct methanol-type fuel cells, methanol reacts with water to yield hydrogen ions and electrons on an anode (see formula (1)) while hydrogen ions and electrons are consumed on a cathode (see formula (2)). Then, the hydrogen ions pass through an electrolyte film and the electrons move on an external circuit, whereby electric energy can be obtained.

CH₂OH + H₂O → CO₂ + 6H⁺ + 6e⁻ (1)

O₂ + 4H⁺ + 4e⁻ → 2H₂O (2)

However, in the direct methanol-type fuel cells, there is a problem such that crossover is caused in which a liquid fuel passes through the electrolyte film and moves to the cathode. Accordingly, because the oxidation reaction that should be conducted on the anode is also conducted on the cathode, there is a problem such that a loss of the liquid fuel is produced and the electric potential of the cathode is lowered. Because the crossover is caused and accordingly, it is difficult to increase the energy density of the liquid fuel by increasing the concentration of a fuel component of the liquid fuel, a liquid fuel is commonly used in which the concentration of a fuel component is lower. Furthermore, a method is known for separately providing a vessel containing a liquid fuel in which the concentration of a fuel component is higher and diluting and for feeding the liquid fuel by means of a mechanical power (for example, see JP-A-2005-108713). Moreover, although an electrolyte film with a low passage of a fuel such as methanol is known in order to suppress crossover (for example, see JP-A-2000-285933), it is difficult to prevent the crossover.

EP-A-1,505,139 (Shiseido Company, Ltd.) discloses a thickener consisting of a microgel obtained by radical polymerization of water soluble ethylene-type unsaturated monomers dissolved in the dispersion phase in a composition having an organic solvent or an oil component as the dispersion medium and water as the dispersion phase. Reference is made to the use of the microgel in an ethanol dispersion. The composition is of particular use in the preparation of cosmetic preparations.

EP-A-1,349,227 (Samsung SDI Co. Ltd) discloses a direct-methanol fuel cell suitable for oxidizing a liquid fuel, wherein the liquid fuel can contain methanol. Electrical power is generated by electrochemical reactions between methanol as the fuel and oxygen as an oxidizing agent. An electrolyte membrane is interposed between an anode and a cathode. Both of the anode and cathode include a fuel diffusion layer for supply and diffusion of fuel, a catalyst layer at which oxidation/reduction of fuel occurs, and electrode backings.

US-A-4452610 (Waite) discloses a modified liquid hydrocarbon fuel containing from 0.05 % to 2 % by weight of particles of polymer microgel.

Then, a configuration such that a fuel chamber is provided with a polymer compound (for example, JP-A-2004-206885) and a configuration such that a liquid fuel-impregnated part includes a porous body (for example, JP-A-2004-171844) are known. In the method disclosed in JP-A-2004-206885, it is necessary to increase the compounding ratio of the polymer compound. Also, if a high concentration of methanol is compounded, it is difficult to prevent crossover. In the method disclosed in JP-A-2004-171844, although a high concentration of methanol is allowed to be compounded, the porosity of the liquid fuel-impregnated part is low whereby there is a problem such that the compounding ratio of methanol cannot be increased substantially.

### DISCLOSURE OF THE INVENTION

### PROBLEMS TO BE SOLVED BY THE INVENTION

The first object of the present invention is to provide a liquid fuel capable of suppressing crossover.

The second object of the present invention is to provide a fuel cell capable of suppressing crossover.

### MEANS FOR SOLVING THE PROBLEM

The present invention provides a fuel cell according to claim 1.

### ADVANTAGEOUS EFFECT OF THE INVENTION

According to the invention, a fuel cell capable of suppressing crossover can be provided.

### BRIEF DESCRIPTION OF THE DRAWINGS

FIG. 1 is a diagram showing one example of a fuel cell according to the present invention.
FIG. 2 is a diagram showing one example of a phase diagram of a three-component system of hexane / a surface active agent / an aqueous solution of monomer.

### EXPLANATION OF LETTERS OR NUMERALS

1: Electrolyte film
2: Cathode
3: Anode
4 and 5: Separators

### BEST MODE FOR IMPLEMENTING THE INVENTION

Next, the best mode for implementing the present invention is described with reference to the drawings.

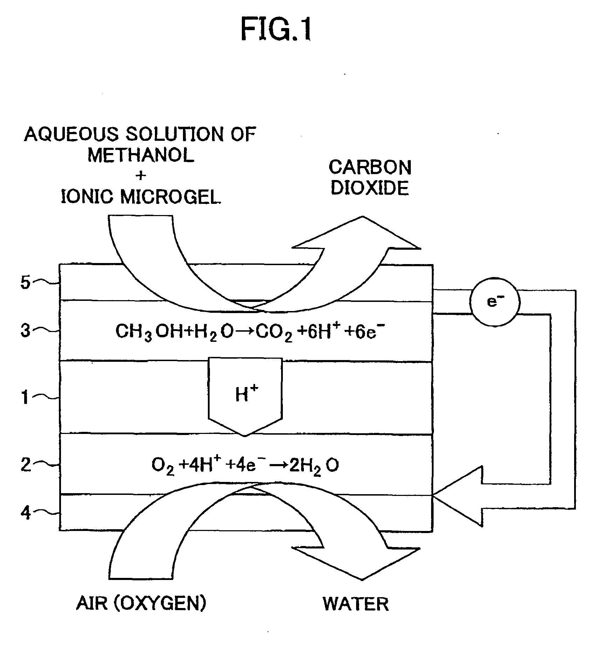

FIG. 1 shows one example of a fuel cell according to the present invention. The fuel cell has an electrolyte film 1 made of a polymer, a cathode 2 (air electrode) for reducing oxygen (oxidizing agent), an anode 3 (fuel electrode) for oxidizing an aqueous solution of methanol (liquid fuel), and separators 4 and 5, wherein the liquid fuel contains an ionic microgel. Herein, because the ionic microgel holds the liquid fuel in the separator 5, passing of the liquid fuel through the electrolyte film 1 to move to the cathode 2 can be suppressed. Thus, crossover is suppressed.

In a liquid fuel according to the present invention, the content of an ionic microgel is preferably 0.1 % by weight or greater and 5.0 % by weight or less, more preferably, 0.2 % by weight or greater and 3.0 % by weight or less, and most preferably 0.2 % by weight or greater and 1.0 % by weight or less.

Furthermore, the liquid fuel preferably contains 10 % by weight or greater and 99.9 % by weight or less of a fuel component, more preferably contains 10 % by weight or greater and 99 % by weight or less of a fuel component, and most preferably contains 30 % by weight or greater and 70 % by weight or less of a fuel component, in order to improve the efficiency of electric power generation of a fuel cell.

In the present invention, the fuel component is preferably at least one of methanol, ethanol and dimethyl ether, and among these, methanol is particularly preferable.

The ionic microgel is preferably obtained by radical-polymerizing an ionic monomer and a nonionic monomer on the condition that a dispersed phase containing the ionic monomer and the nonionic monomer is dispersed in a dispersion medium. Herein, an organic solvent or an oily component can be used for the dispersion medium, while water can be used for the dispersed phase. That is, the ionic microgel is preferably manufactured by using a reversed-phase emulsion polymerization method. Thereby, an obtained polymer electrolyte is a microgel and therefore a milling process can be omitted. Furthermore, after polymerization of the monomers, a powdery ionic microgel can be separated through precipitation and purification processes. Moreover, when the powdery ionic microgel is dispersed in, for example, water, methanol, ethanol, dimethyl ether or a mixture thereof, the powdery ionic microgel is swelled, and therefore, crossover can be suppressed.

For the organic solvent, there can be listed alkanes such as pentane, hexane, heptane, octane, nonane, decane and undecane; cycloalkanes such as cyclopentane, cyclohexane, cycloheptane and cycloctane; and aromatic hydrocarbons and cyclic hydrocarbons such as benzene, toluene, xylene, decalin and naphthalene- For the oily component, nonpolar oily components such as paraffin oils can be listed.

In the present invention, a dispersed phase in which the ionic monomer and the nonionic monomer are dissolved is preferably dispersed in the dispersion medium by using a surface active agent. Particularly, a polymerization system in reversed-phase emulsion polymerization can be a single-phase microemulsion or fine W/O emulsion by using a surface active agent with a hydrophile-lipophile balance (HLB) adjusted to an appropriately selected one.

The single-phase microemulsion is a condition such that an oil phase and an aqueous phase coexist thermodynamically stably and surface tension between the oil phase and the aqueous phase is the minimal. Furthermore, the fine W/O emulsion is a condition such that an oil phase and an aqueous phase are thermodynamically unstable but exist kinetically stably. Generally, the particle diameter of an aqueous phase of the fine W/O emulsion is about several dozen to several hundred nm. These emulsion conditions are determined by only the composition and temperature of a system and do not depend on a mechanical agitation condition or the like.

In the present invention, it is preferable to dissolve the ionic monomer and the nonionic monomer in the dispersed phase, mix the dispersed phase with the dispersion medium, heating a mixture to a predetermined temperature, adding a polymerization initiator into an aqueous phase, and polymerizing the monomers.

Generally, it is known that the physical property of an obtained polymer is changed depending on the condition of agitation during polymerization in a heterogeneous polymerization method. This is because an emulsion system is in a thermodynamically unstable state and the form and size of an emulsion particle is changed depending on the agitation condition.

In the present invention, the above problem can be avoided by polymerizing the monomers on the condition that a thermodynamically stable single-phase microemulsion is formed or the condition that a metastable fine W/O emulsion is formed which exists near the single-phase area. Specifically, the ionic microgel can be stably manufactured by polymerizing the monomers in an aqueous phase while the composition of a polymerization system (the kind of the organic solvent and the HLB of the surface active agent) is adjusted so that a single-phase microemulsion or a fine W/O emulsion is formed near the optimal polymerization temperature of a polymerization initiator for common thermal polymerization or redox polymerization.

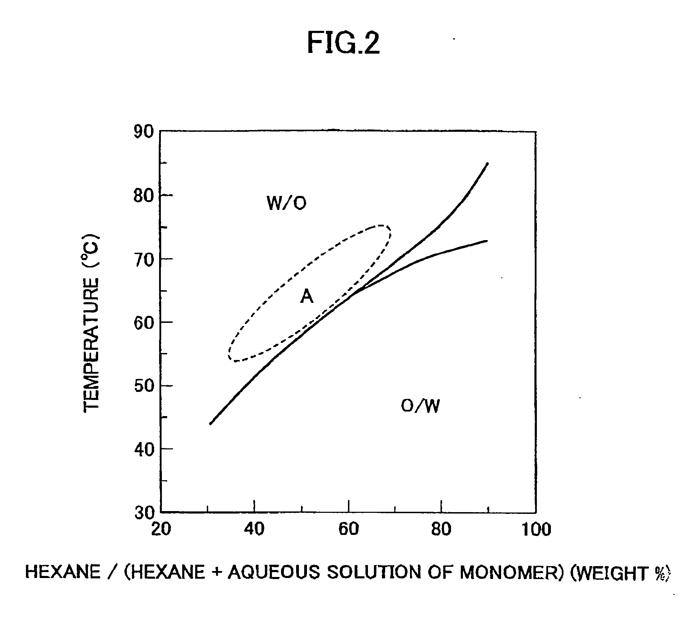

One example of the phase diagram of a three-component system of hexane / a surface active agent / an aqueous solution of monomer is shown in FIG. 2. Herein, the monomer is a mixture of the ionic monomer and the nonionic monomer. Area A is an area in which a single-phase miroemulsion or a fine W/O emulsion is formed and polymerization is preferably conducted in this area A.

Meanwhile, it is difficult to manufacture an ionic microgel stably in suspension polymerization because the particle diameter of an aqueous phase is hardly controlled at the time of monomer polymerization.

Meanwhile, it is necessary to mill a polymer electrolyte obtained by copolymerizing the ionic monomer and the nonionic monomer in order to manufacture an ionic microgel in a homogeneous polymerization system. However, the gel may not homogeneously be dispersed in a liquid fuel.

In the present invention, the nonionic monomer is preferably a dialkyl (meth)acrylamide represented by the general formula: 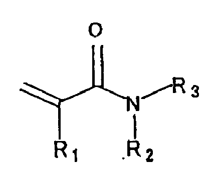 wherein R₁ is a hydrogen atom or a methyl group and R₂ and R₃ are each independently a methyl group, an ethyl group, a propyl group or an isopropyl group. More preferably, the nonionic monomer is N,N-dimethyl (meth)acrylamide or N,N-diethyl (meth)acrylamide.

Furthermore, for the ionic monomer, an anionic (meth)acrylaminde derivative represented by the general formula: 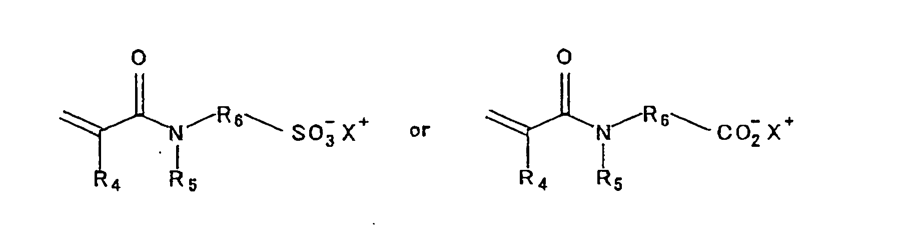 can be used, wherein R₄ and R₅ are each independently a hydrogen atom or a methyl group, R₆ is a linear or branched alkylene group whose carbon atom number is 1 or greater and 6 or less, and X⁺ is a hydrogen atom, a metal ion, or an ammonium ion.

Alternatively, for the ionic monomer, a cationic acrylamide derivative represented by the general formula: 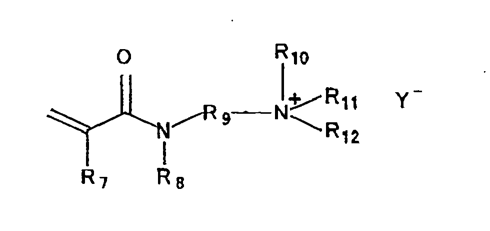 can be used, wherein R₇ is a hydrogen atom or a methyl group, R₈ is a hydrogen atom or a linear or branched alkyl group whose carbon atom number is 1 or greater and 6 or less, R₉ is a linear or branched alkylene group whose carbon atom number is 1 or greater and 6 or less, R₁₀, R₁₁, and R₁₂ are each independently a methyl group or an ethyl group, and Y- is a halide ion.

The ionic monomer is preferably the above-described anionic (meth)acrylamide derivative and more preferably 2-acrylamide-2-methylpropanesulfonic acid or a salt thereof.

The monomer composition ratio of the nonionic monomer and the ionic monomer (or the charging ratio of the polymerization system) is appropriately selected depending on the composition ratio of monomers of an objective ionic microgel. Additionally, the monomer composition ratio of the ionic microgel is approximately identical to the charging ratio of the polymerization system. In regard to the charging ratio of the polymerization system of the nonionic monomer and ionic monomer, the nonionic monomer: the ionic monomer (molar ratio) is commonly 0.5: 9.5 - 9.5: 0.5, preferably is 1: 9 - 9: 1, more preferably is 7: 3 - 9: 1, and most preferably is 8: 2.

In the present invention, the ionic microgel preferably contains a copolymer obtained by copolymerizing N,N-dimethylacrylamide and 2-acrylamide-2-methylpropanesulfonic acid. Thereby, crossover can be further suppressed.

In the present invention, the dispersed phase may further contain a crosslinking agent. For the crosslinking agent, a (meth)acrylamide derivative or a (meth)acrylic acid derivative can be used, and specifically, a compound represented by the general formula: 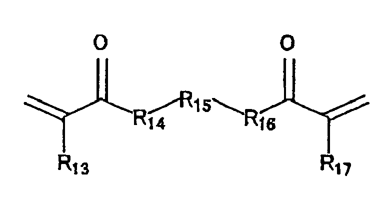 can be listed, wherein R₁₃ and R₁₇ are each independently a hydrogen atom or a methyl group, R₁₄ and R₁₆ are each independently an oxy group or an imino group, R₁₅ is a linear or branched alkylene group whose carbon atom number is 1 or greater and 6 or less or a polyoxyethylene group whose carbon atom number is 8 or greater and 200 or less. Additionally, the crosslinking agent may be three or more functional.

For the crosslinking agent, there can be listed, for example, ethylene glycol diacrylate, ethylene glycol dimethacrylate, polyoxyethylene diacrylate, polyoxyethylene dimethacrylate, diethylene glycol dimethacrylate, trimethylolpropane triacrylate, N,N'-methylenebisacrylamide, N,N'-ethylenebisacrylamide, triallyl isocyanurate, and pentaerythritol dimethacrylate, and these crosslinking agents can be used singularly or in combination. Among these crosslinking agents, N,N'-methylenebisacrylamide is preferable.

The ratio of the number of mole(s) of the crosslinking agent to the total number of moles of the nonionic monomer and ionic monomer is preferably 0.0001 % or greater and 2.0 % or less. If this ratio is less than 0.0001 %, the crosslink of the polymer may be insufficient. On the other hand, if this ratio is greater than 2.0 %, the density of crosslink of the polymer is so high that the ionic microgel may not be able to swell sufficiently, and therefore, crossover may be hardly suppressed.

In order that the nonionic monomer and the ionic monomer are dissolved in the dispersed phase to manufacture an ionic microgel, it is necessary to select both the optimal dispersion medium and surface active agent. Then, the hydrophile-lipophile balance (HLB) of the surface active agent can be adjusted by using a phase diagram for the composition of a polymerization system such that the surface active agent exhibits a clouding point at a temperature suited for radical polymerization. Thereby, a single-phase microemulsion or fine W/O emulsion can be formed at the temperature at which normal radical polymerization is conducted.

For the surface active agent, there can be listed, for example, polyoxyethylene cetyl ether, polyoxyethylene oleyl ether, polyoxyethylene stearyl ether, polyoxyethylene nonylphenyl ether, polyoxyethylene lauryl ether, polyoxyethylene hexyldecyl ether, polyoxyethylene isostearyl ether, polyoxyethylene octyldodecyl ether, polyoxyethylene behenyl ether, polyoxyethylene cholesteryl ether, polyoxyethylene hardened castor oil, sorbitan fatty acid esters, glycerin monofatty acid esters, glycerin trifatty acid esters, polyglycerin fatty acid esters, polyoxyethylene glycerin isostearic acid esters, polyoxyethylene glycerin triisostearic acid esters, polyoxyethylene glycerin monostearic acid esters, polyoxyethylene glycerin distearic acid esters, and polyoxyethylene glycerin tristearic acid esters. The HLB of surface active agent can be adjusted to the desired HLB by appropriately combining these surface active agents.

Furthermore, when a dialkylacrylamide and an ionic acrylamide derivative are copolymerized, a spontaneous crosslinking reaction proceeds. In this case, a chemically self-crosslinked ionic microgel is obtained even if no crosslinking agent is added.

In the present invention, the weight average molecular weight of the ionic microgel is preferably 100,000 or greater and 5,000,000 or less (PEG standard: measured by means of GPC).

Furthermore, the average particle diameter of the ionic microgel is preferably 10 nm or greater and 10 µm or less and more preferably 10 nm or greater and 1 nm or less.

In the present invention, the apparent viscosity of a water dispersion liquid containing 0.5 % by weight of the ionic microgel is preferably 10,000 mPa·s or greater at a shear rate of 1.0 s⁻¹- Furthermore, the apparent viscosity of an ethanol dispersion liquid containing 0.5 % by weight of the ionic microgel is preferably 5,000 mPa·s or greater at a shear rate of 1.0 s⁻¹. Moreover, the dynamic elastic moduli of a water dispersion liquid or ethanol dispersion liquid containing 0.5 % by weight of the ionic microgel preferably have a relation of G' > G" at a distortion of 1 % or less and a frequency of 0.01 Hz or greater and 10 Hz or less.

Additionally, the apparent viscosity of the water or ethanol dispersion liquid of the ionic microgel can be measured at 25 °C by using a cone/plate-type rheometer MCR-300 (produced by Paar Rhysica)- Also, the dynamic elastic moduli can be measured at 25 °C by using a cone/plate-type rheometer MCR-300, wherein G' and G" mean a storage elastic modules and a loss elastic modulus, respectively.

### [Practical examples]

Furthermore, specific practical examples of the present invention are described.

A fuel cell as shown in FIG. 1 was manufactured as follows.

For an electrolyte film 1, a perfluorosulfonic acid film was used, and for a cathode 2 and an anode 3, a platinum catalyst carried on carbon and a platinum - ruthenium catalyst carried on carbon were used, respectively. The electrolyte film 1 was sandwiched between the cathode 2 and the anode 3 and the electrolyte film 1, the cathode 2 and the anode 3 were hot-pressed to manufacture a joining of the electrolyte film and electrodes. Furthermore, separators 4 and 5 were provided to manufacture a fuel cell. Additionally, the raw material of the separator is not particularly limited as long as it is inactive in the liquid fuel, and there can be listed, for example, synthetic resins such as PTFEs, rigid poly(vinyl chloride)s, poly(propylene)s and poly(ethylene)s, and corrosion-resistant metals such as stainless steels.

### (Practical example 1)

An ionic microgel was manufactured by the following method.

35 g of N,N-dimethylacrylamide, 17.5 g of 2-acrylamide-2-methylpropanesulfonic acid, and 70 mg of methylenebisacrylamide were dissolved in 260 g of ion-exchanged water and the pH of an obtained solution was adjusted to 7.0 by using sodium hydroxide to prepare an aqueous solution of monomers.

260 g of n-hexane and 8.7 g of polyoxyethylene (3) oleyl ether (EMALEX 503 produced by Nihon-Emulsion Co., Ltd.) and 17.6 g of polyoxyethylene (6) oleyl ether (EMALEX 506 produced by Nihon-Emulsion Co., Ltd.) as surface active agents were thrown into and mixed in 1,000 ml three-necked flask with a reflux device to dissolve the surface active agents and N₂ replacement was conducted.

Furthermore, the aqueous solution of monomers is added and an obtained solution was heated in an oil bath at a temperature of 65 °C or greater and 70 °C or less while the solution was agitated under N₂ atmosphere. When the temperature of a polymerization system reached a temperature of 65 °C or greater and 70 °C or less, it was confirmed that the polymerization system was in a state of semi-transparent microemulsion and subsequently 2 g of ammonium persulfate was added to initiate polymerization of the monomers. While the temperature of the polymerization system was retained at a temperature of 65 °C or greater and 70 °C or less, the polymerization system was agitated for 3 hours to synthesize an ionic microgel.

After the polymerization of the monomers was completed, acetone was added into a suspension liquid of the ionic microgel to precipitate the ionic microgel. The obtained precipitate was subsequently washed with acetone three times to remove the residual monomers and surface active agents. Furthermore, after filtration, the precipitate was dried under a reduced pressure to obtain a white-powdery ionic microgel.

0.2 g of the ionic microgel was dissolved in 99.8 g of 70 % aqueous solution of methanol to prepare a liquid fuel.

### (Practical example 2)

A liquid fuel was prepared by dissolving 5.0 g of the ionic microgel in 95.0 g of 70 % aqueous solution of methanol in practical example 1.

### (Comparative example 1)

A 70 % aqueous solution of methanol was used as a liquid fuel.

### (Comparative example 2)

A liquid fuel was prepared by dissolving 0.2 g of a commercially available polyethylene glycol (with a number average molecular weight of 20,000) in 99.8 g of 70 % aqueous solution of methanol.

### (Comparative example 3)

A liquid fuel was prepared by dissolving 5.0 g of a commercially available polyethylene glycol (with a number average molecular weight-of 20,000) in 95.0 g of 70 % aqueous solution of methanol.

### (Comparative example 4)

A liquid fuel was prepared by dissolving 0.2 g of a commercially available polyethylene glycol (with a number average molecular weight of 500,000) in 99.8 g of 70 % aqueous solution of methanol.

### (Comparative example 5)

A liquid fuel was prepared by dissolving 5.0 g of a commercially available polyethylene glycol (with a number average molecular weight of 500,000) in 95.0 g of 70 % aqueous solution of methanol.

### (Evaluation method and evaluation results)

The liquid fuel prepared in any of practical examples 1 and 2 and comparative examples 1 - 5 was fed to the anode 2 of the fuel cell and the voltage after 2 hours and the continuous electric power generation duration were measured. The results are shown in Table 1.

| | Polymer concentration / weight % | Voltage / V | Electric power generation duration / day |
|---|---|---|---|
| Practical example 1 | 0.2 | 0.48 | 7 |
| Practical example 2 | 5.0 | 0.48 | 7 |
| Comparative example 1 | 0.0 | 0.05 | < 1 |
| Comparative example 2 | 0.2 | 0.21 | 2 |
| Comparative example 3 | 5.0 | 0.21 | 2 |
| Comparative example 4 | 0.2 | 0.32 | 2 |
| Comparative example 5 | 5.0 | 0.33 | 3 |

As is clear from Table 1, drops of the voltages were suppressed and the electric power generation durations were increased so that crossovers were suppressed in practical examples 1 and 2 in which the liquid fuel containing the ionic microgel was fed to the anode 2, compared to comparative example 1 in which the liquid fuel containing no polymer was fed.

On the other hand, drops of the voltages were suppressed and the electric power generation durations were increased in comparative examples 2 - 5 in which the liquid fuel containing the polymer was fed, compared to comparative example 1, but they were inferior compared to practical examples 1 and 2.

Furthermore, as is indicated in practical example 1, the ionic microgel can suppress a voltage drop and can increase an electric power generation duration and further can suppress crossover effectively even if the concentration thereof in the liquid fuel is low.

### [Appendix]

Typical embodiments of the present invention are described below.

Embodiment (1) is a liquid fuel characterized by containing an ionic microgel. According to embodiment (1), a liquid fuel capable of suppressing crossover can be provided.

Embodiment (2) is the liquid fuel as described in embodiment (1), characterized in that a content of the ionic microgel is 0.1 % by weight or greater and 5.0 % by weight or less. According to embodiment (2), crossover can be suppressed.

Embodiment (3) is the liquid fuel as described in embodiment (1) or (2), characterized by containing 10 % by weight or greater and 99.9 % by weight or less of a fuel component. According to embodiment (3), an efficiency of electric power generation can be improved.

Embodiment (4) is the liquid fuel as described in embodiment (3), characterized in that the fuel component is at least one of methanol, ethanol, and dimethyl ether. According to embodiment (4), an efficiency of electric power generation can be improved.

Embodiment (5) is the liquid fuel as described in any of embodiments (1) to (4), characterized in that the ionic microgel is obtained by radical-polymerizing an ionic monomer and a nonionic monomer on a condition that a dispersed phase containing the ionic monomer and the nonionic monomer is dispersed in a dispersion medium. According to embodiment (5), crossover can be further suppressed.

Embodiment (6) is the liquid fuel as described in embodiment (5), characterized in that the dispersed phase containing the ionic monomer and the nonionic monomer is dispersed in the dispersion medium by using a surface active agent. According to embodiment (6), a single-phase microemulsion or a fine W/O emulsion can be formed.

Embodiment (7) is the liquid fuel as described in embodiment (5) or (6), characterized in that the ionic monomer is an anionic monomer. According to embodiment (7), crossover can be further suppressed.

Embodiment (8) is the liquid fuel as described in embodiment (7), characterized in that the anionic monomer is at least one of carboxylic acids, carboxylates (salts), sulfonic acid, and sulfonates (salts). According to embodiment (8), crossover can be further suppressed.

Embodiment (9) is the liquid fuel as described in any of embodiments (5) to (8), characterized in that the dispersed phase further contains a crosslinking agent. According to embodiment (9), crossover can be further suppressed.

Embodiment (10) is a fuel cell characterized by having an anode for oxidizing the liquid fuel as described in any of embodiments (1) to (9), a cathode for reducing an oxidizing agent, and an electrolyte film sandwiched between the anode and the cathode. According to embodiment (10), a fuel cell capable of suppressing crossover can be provided.

The present invention is not limited to the specifically disclosed embodiment(s).

### INDUSTRIAL APPLICABILITY

The present invention is applicable to a liquid fuel and a fuel cell.

## Claims

1. A fuel cell including a liquid fuel, an anode for oxidizing the liquid fuel, a cathode for reducing an oxidizing agent, and an electrolyte film sandwiched between the anode and the cathode, wherein the liquid fuel includes an ionic microgel.

2. The fuel cell according to Claim 1, wherein a content of the ionic microgel in the liquid fuel is 0.1% by weight or greater and 5.0% by weight or less.

3. The fuel cell according to Claim 1 or Claim 2, wherein the liquid fuel includes 10% by weight or greater and 99.9% by weight or less of a fuel component.

4. The fuel cell according to Claim 3, wherein the fuel component includes at least one of methanol, ethanol and dimethyl ether.

5. The fuel cell according to any one of Claims 1 to 4, wherein the ionic microgel is obtained by radical-polymerizing an ionic monomer and a nonionic monomer on a condition that a dispersed phase including the ionic monomer and the nonionic monomer is dispersed in a dispersion medium.

6. The fuel cell according to Claim 5, wherein the dispersed phase including the ionic monomer and the nonionic monomer is dispersed in the dispersion medium by using a surface active agent.

7. The fuel cell according to Claim 5 or Claim 6, wherein the ionic monomer is an anionic monomer.

8. The fuel cell according to Claim 7, wherein the anionic monomer includes at least one of carboxylic acids, carboxylates, sulfonic acid, and sulfonates.

9. The fuel cell according to any one of Claims 5 to 8, wherein the dispersed phase further includes a crosslinking agent.

10. Use of a liquid fuel for a fuel cell including an anode for oxidizing the liquid fuel, a cathode for reducing an oxidizing agent, and an electrolyte film sandwiched between the anode and the cathode, wherein the liquid fuel includes an ionic microgel.

## Patentansprüche

1. Brennstoffzelle, enthaltend einen flüssigen Brennstoff, eine Anode zum Oxidieren des flüssigen Brennstoffs, eine Katode zum Reduzieren eines Oxidationsmittels und einen zwischen der Anode und der Katode eingeschobenen Elektrolytfilm, wobei der flüssige Brennstoff ein ionisches Mikrogel enthält.

2. Brennstoffzelle nach Anspruch 1, wobei ein Gehalt des ionischen Mikrogels in dem flüssigen Brennstoff 0,1 % nach Gewicht oder mehr und 5,0 % nach Gewicht oder weniger beträgt.

3. Brennstoffzelle nach Anspruch 1 oder Anspruch 2, wobei der flüssige Brennstoff 10 % nach Gewicht oder mehr und 99,9 % nach Gewicht oder weniger einer Brennstoffkomponente enthält.

4. Brennstoffzelle nach Anspruch 3, wobei die Brennstoffkomponente mindestens eines von Methanol, Ethanol und Dimethylether enthält.

5. Brennstoffzelle nach einem der Ansprüche 1 bis 4, wobei das ionische Mikrogel durch radikalische Polymerisation eines ionischen Monomers und eines nichtionischen Monomers unter einer Bedingung, dass eine dispergierte Phase, die das ionische Monomer und das nichtionische Monomer enthält, in einem Dispersionsmedium dispergiert wird, erhalten wird.

6. Brennstoffzelle nach Anspruch 5, wobei die dispergierte Phase, die das ionische Monomer und das nichtionische Monomer enthält, in dem Dispersionsmedium unter Verwendung eines oberflächenaktiven Mittels dispergiert wird.

7. Brennstoffzelle nach Anspruch 5 oder Anspruch 6, wobei das ionische Monomer ein anionisches Monomer ist.

8. Brennstoffzelle nach Anspruch 7, wobei das anionische Monomer mindestens eines von Carbonsäuren, Carboxylaten, Sulfonsäureund Sulfonaten enthält.

9. Brennstoffzelle nach einem der Ansprüche 5 bis 8, wobei die dispergierte Phase weiter ein Vernetzungsmittel enthält.

10. Verwendung eines flüssigen Brennstoffs für eine Brennstoffzelle, enthaltend eine Anode zum Oxidieren des flüssigen Brennstoffs, eine Katode zum Reduzieren eines Oxidationsmittels und einen zwischen der Anode und der Katode eingeschobenen Elektrolytfilm, wobei der flüssige Brennstoff ein ionisches Mikrogel enthält.

## Revendications

1. Pile à combustible comprenant un combustible liquide, une anode pour l'oxydation du combustible liquide, une cathode pour la réduction d'un agent oxydant et un film d'électrolyte pris en sandwich entre l'anode et la cathode, dans laquelle le combustible liquide comprend un microgel ionique.

2. Pile à combustible selon la revendication 1, dans laquelle la teneur du microgel ionique dans le combustible liquide est supérieure ou égale à 0,1 % en poids et inférieure ou égale à 5,0 % en poids.

3. Pile à combustible selon la revendication 1 ou la revendication 2, dans laquelle le combustible liquide comprend une quantité supérieure ou égale à 10 % en poids et inférieure ou égale à 99,9 % en poids d'un composant combustible.

4. Pile à combustible selon la revendication 3, dans laquelle le composant combustible comprend au moins un combustible parmi le méthanol, l'éthanol et l'oxyde de diméthyle.

5. Pile à combustible selon l'une quelconque des revendications 1 à 4, dans laquelle le microgel ionique est obtenu par polymérisation radicalaire d'un monomère ionique et d'un monomère non ionique à condition qu'une phase dispersée comprenant le monomère ionique et le monomère non ionique soit dispersée dans un milieu de dispersion.

6. Pile à combustible selon la revendication 5, dans laquelle la phase dispersée comprenant le monomère ionique et le monomère non ionique est dispersée dans le milieu de dispersion à l'aide d'un agent tensioactif.

7. Pile à combustible selon la revendication 5 ou la revendication 6, dans laquelle le monomère ionique est un monomère anionique.

8. Pile à combustible selon la revendication 7, dans laquelle le monomère anionique comprend au moins un monomère parmi les acides carboxyliques, les carboxylates, les acides sulfoniques et les sulfonates.

9. Pile à combustible selon l'une quelconque des revendications 5 à 8, dans laquelle la phase dispersée comprend en outre un agent de réticulation.

10. Utilisation d'un combustible liquide pour une pile à combustible comprenant une anode pour l'oxydation du combustible liquide, une cathode pour la réduction d'un agent oxydant et un film d'électrolyte pris en sandwich entre l'anode et la cathode, dans laquelle le combustible liquide comprend un microgel ionique.
